# EUROPEAN PATENT APPLICATION

(11) **EP 4 250 548 A1**
(43) Date of publication of application: **27.09.2023**
(21) Application number: 20964602.5
(22) Date of filing: 09.12.2020
(51) Int. Cl.: H02M 3/335

(54) **POWER CONVERTER AND DRIVE METHOD THEREOF**

(71) Applicant: Huawei Technologies Co., Ltd., Shenzhen, Guangdong 518129 (CN)
(72) Inventor: PAN, Liwen, Shenzhen, Guangdong 518129 (CN); FENG, Hui, Shenzhen, Guangdong 518129 (CN); WANG, Deyuan, Shenzhen, Guangdong 518129 (CN); JIN, Xinyu, Shanghai 200240 (CN); WANG, Yong, Shanghai 200240 (CN); YU, Yao, Shenzhen, Guangdong 518129 (CN)
(74) Representative: Maiwald GmbH
(86) International application number: PCT/CN2020/135033
(87) International publication number: WO 2022/120662

(57) **Abstract**

This application provides a new power conversion apparatus and a method for driving the power conversion apparatus. In the power conversion apparatus provided in this application, two switching transistors in a bridge arm circuit of an input converter are separately connected in parallel to a circuit formed by connecting a switching transistor and a capacitor in series, and/or two switching transistors in a bridge arm circuit of an output converter are separately connected in parallel to a circuit formed by connecting a switching transistor and a capacitor in series. The power conversion apparatus provided in this application has a larger gain range of an output voltage when driven by a corresponding driving method.

## Description

### TECHNICAL FIELD

This application relates to the power electronics field, and more specifically, to a power converter and a method for driving the power converter.

### BACKGROUND

A power supply is an energy source for an active component in an electronic system to work. Performance of the power supply directly affects performance of the electronic system. The power supply may be a "heart" of the electronic system.

In most cases, a plurality of power supplies with different voltages or currents are required in one electronic system. If a separate power supply is designed for each requirement, circuit complexity, a size, and costs of the electronic system are usually increased.

To reduce the circuit complexity, size, and costs of the electronic system, a power converter is proposed in this field, which can convert an input constant alternating current or direct current into an output adjustable direct current or alternating current.

However, as an electronic system has an increasingly high requirement for a gain range of an output voltage of a power converter, a gain range of a currently common power converter, for example, an existing dual active bridge (dual active bridge) converter or LLC resonant network converter, cannot meet the requirement.

Therefore, how to increase the gain range of the output voltage of the power converter becomes a technical problem to be resolved urgently.

### SUMMARY

This application provides a power conversion apparatus, a method for driving the power conversion apparatus, and a related drive apparatus, to increase a gain range of an output voltage of the power conversion apparatus.

According to a first aspect, this application provides a power conversion apparatus. The power conversion apparatus includes a first full-bridge converter, a transformer, and a second full-bridge converter. The transformer is separately connected to the first full-bridge converter and the second full-bridge converter. In addition, the power converter further includes a first sub-circuit and a second sub-circuit. The first sub-circuit includes a first switching transistor and a first capacitor that are connected in series, the second sub-circuit includes a second switching transistor and a second capacitor that are connected in series, and the first sub-circuit and the second sub-circuit are respectively connected in parallel to two switching transistors in one bridge arm circuit of the first full-bridge converter.

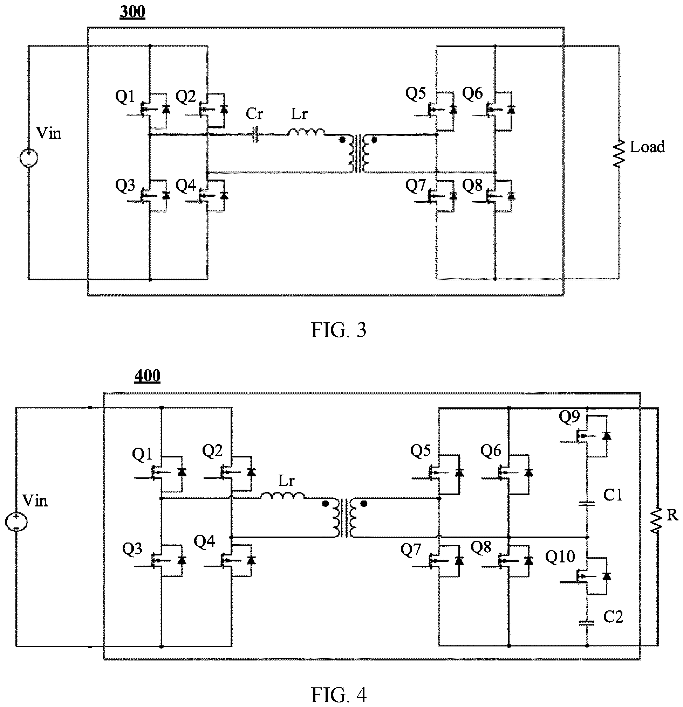

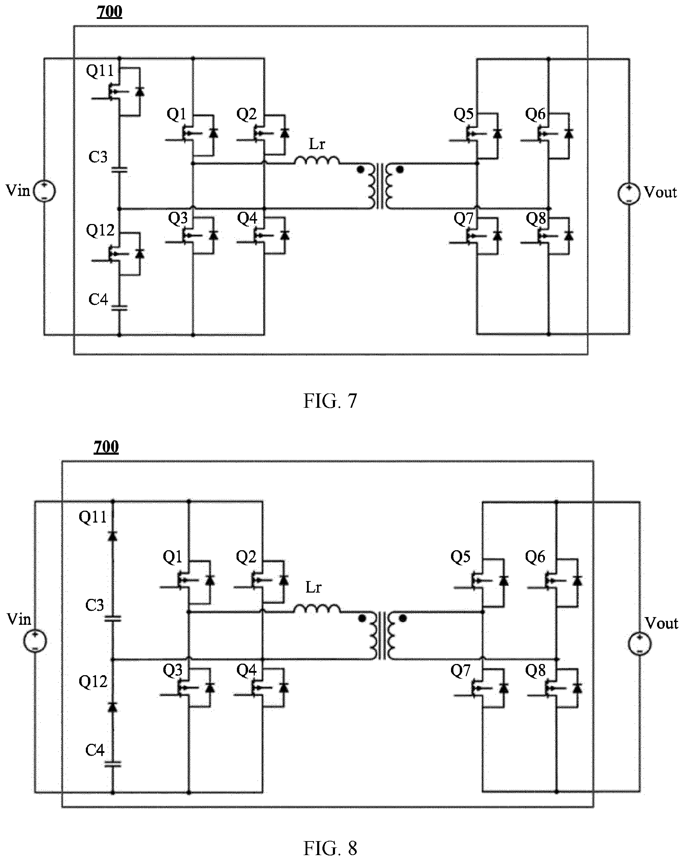

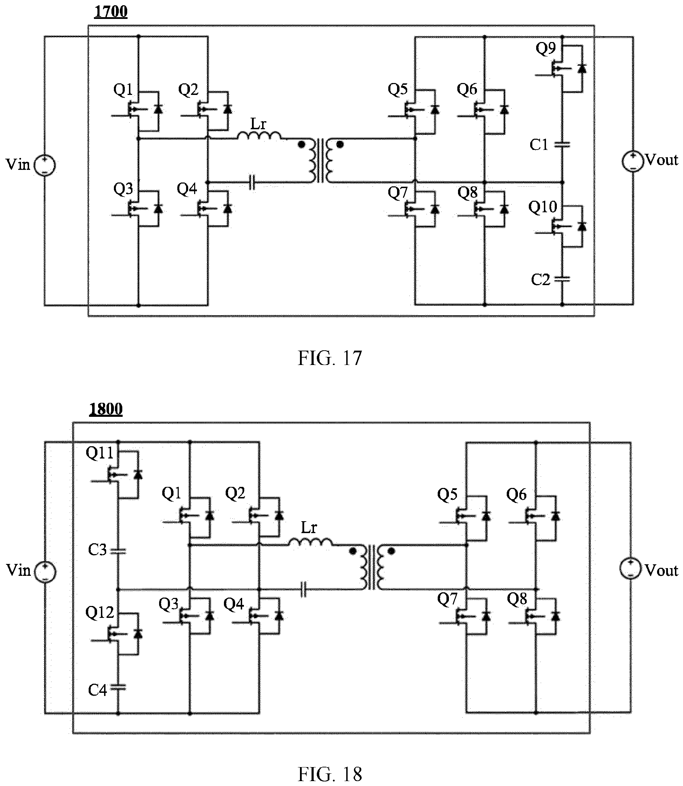

In addition to the two full-bridge converters, namely, the first full-bridge converter and the second full-bridge converter, and the transformer, the power conversion apparatus in this application includes the two sub-circuits that are respectively connected in parallel to the two switching transistors in the bridge arm circuit of the first full-bridge converter in the two full-bridge converters. Therefore, the following functions can be implemented. In a case in which the first full-bridge converter is a full-bridge converter connected to an input power supply, when the first full-bridge converter is driven to work in a half-bridge mode, the switching transistors in the two sub-circuits may be driven to be turned on, to drive the capacitors in the two sub-circuits to be charged, so that the power conversion apparatus, for example, the power conversion apparatus shown in FIG. 7 or FIG. 18 can output an output voltage with a smaller gain. In a case in which the first full-bridge converter is a full-bridge converter connected to a load, when the first full-bridge converter is driven to work in the half-bridge mode, the switching transistors in the two sub-circuits may be driven to be turned on, to drive the capacitors in the two sub-circuits to be charged, so that the power conversion apparatus, for example, the power conversion apparatus shown in FIG. 4 or FIG. 17 can output an output voltage with a larger gain.

Because the two sub-circuits are added, regardless of whether the power conversion apparatus can output the output voltage with a smaller gain or can output the output voltage with a larger gain, a gain range of the output voltage of the power conversion apparatus can be finally increased.

That the first sub-circuit and the second sub-circuit are respectively connected in parallel to two switching transistors in one bridge arm circuit of the first full-bridge converter may be understood as that one switching transistor in the bridge arm circuit (which is referred to as a first bridge arm circuit) of the first full-bridge converter is connected in parallel to the first sub-circuit, and the other switching transistor is connected in parallel to the second sub-circuit.

With reference to the first aspect, in a first possible implementation, the power conversion apparatus further includes a drive apparatus. The drive apparatus is configured to: drive the first full-bridge converter to work in a half-bridge mode and the second full-bridge converter to work in a full-bridge mode, and drive the first switching transistor and the second switching transistor to be turned on.

With reference to the first aspect, in a second possible implementation, the power conversion apparatus further includes a third sub-circuit and a fourth sub-circuit. The third sub-circuit includes a third switching transistor and a third capacitor that are connected in series, the fourth sub-circuit includes a fourth switching transistor and a fourth capacitor that are connected in series, and the third sub-circuit and the fourth sub-circuit are respectively connected in parallel to two switching transistors in one bridge arm circuit of the second full-bridge converter.

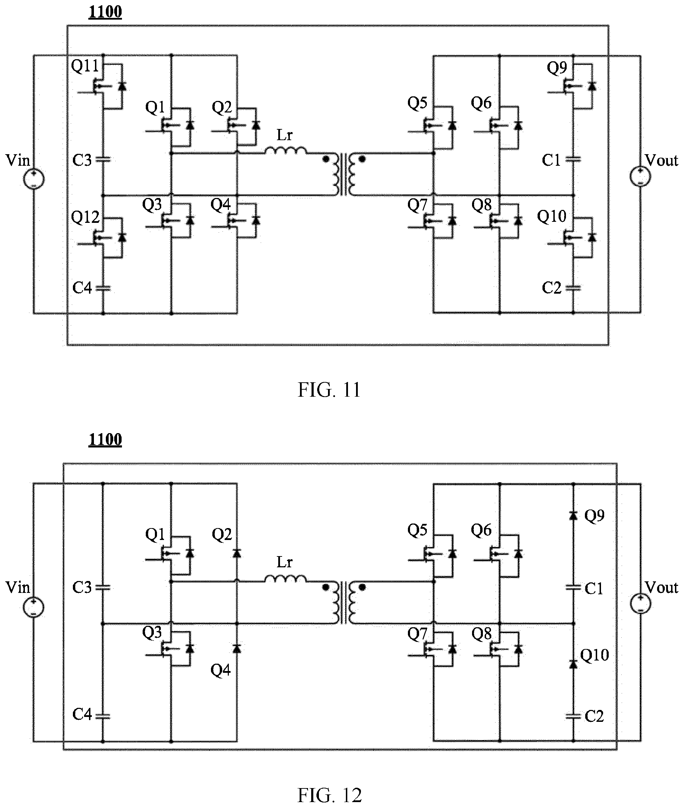

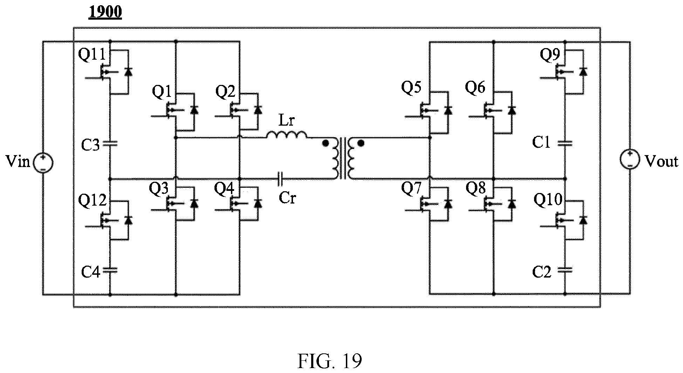

Because the power conversion apparatus in this implementation further includes the two sub-circuits that are connected in parallel to the two switching transistors in the bridge arm circuit of the second full-bridge circuit, the following functions may be implemented. In a case in which the first full-bridge converter is a full-bridge converter connected to the input power supply, when the second full-bridge converter is driven to work in the half-bridge mode, the switching transistors in the two sub-circuits associated with the second full-bridge converter may be driven to be turned on, to drive the capacitors in the two sub-circuits to be charged, so that the power conversion apparatus can output an output voltage with a larger gain. In a case in which the first full-bridge converter is a full-bridge converter connected to the load, when the first full-bridge converter is driven to work in the half-bridge mode, the switching transistors in two sub-circuits associated with the second full-bridge converter may be driven to be turned on, to drive the capacitors in the two sub-circuits to be charged, so that the power conversion apparatus can output an output voltage with a smaller gain. For example, the power conversion apparatus is the power conversion apparatus shown in FIG. 11 or FIG. 19.

Because the third sub-circuit and the fourth sub-circuit are added, regardless of whether the power conversion apparatus can output the output voltage with a larger gain or can output the output voltage with a smaller gain, a gain range of the output voltage of the power conversion apparatus can be further increased finally.

That the third sub-circuit and the fourth sub-circuit are respectively connected in parallel to two switching transistors in one bridge arm circuit of the second full-bridge converter may be understood as that one switching transistor in the bridge arm circuit (which is referred to as a second bridge arm circuit) of the second full-bridge converter is connected in parallel to the third sub-circuit, and the other switching transistor is connected in parallel to the fourth sub-circuit.

With reference to the second possible implementation, in a third possible implementation, the power conversion apparatus further includes a driver. The driver is configured to: drive the first full-bridge converter to work in the half-bridge mode and the second full-bridge converter to work in the full-bridge mode, and drive the first switching transistor and the second switching transistor to be turned on; or drive the second full-bridge converter to work in the half-bridge mode and the first full-bridge converter to work in the full-bridge mode, and drive the third switching transistor and the fourth switching transistor to be turned on.

With reference to any one of the first aspect or the possible implementations of the first aspect, in a fourth possible implementation, the first full-bridge converter is configured to connect to the load, and the second full-bridge converter is configured to connect to the input power supply.

With reference to any one of the first aspect or the possible implementations of the first aspect, in a fifth possible implementation, the second full-bridge converter is configured to connect to the load, and the first full-bridge converter is configured to connect to the input power supply.

In some possible implementations of the first aspect, the power conversion apparatus may be a DAB converter.

In some other possible implementations, the power conversion apparatus may further include a resonant network. The resonant network is located between the full-bridge converter configured to connect to the input power supply and the transformer.

For example, when the first full-bridge converter is configured to connect to the input power supply, the first full-bridge converter, the resonant network, the transformer, and the second full-bridge converter are sequentially connected to form an LLC converter.

For another example, when the second full-bridge converter is configured to connect to the input power supply, the second full-bridge converter, the resonant network, the transformer, and the first full-bridge converter are sequentially connected to form an LLC converter.

According to a second aspect, this application provides a method for driving a power conversion apparatus. The power conversion apparatus includes a first full-bridge converter, a transformer, and a second full-bridge converter. The transformer is separately connected to the first full-bridge converter and the second full-bridge converter. In addition, the power converter further includes a first sub-circuit and a second sub-circuit. The first sub-circuit includes a first switching transistor and a first capacitor that are connected in series, the second sub-circuit includes a second switching transistor and a second capacitor that are connected in series, and the first sub-circuit and the second sub-circuit are respectively connected in parallel to two switching transistors in one bridge arm circuit of the first full-bridge converter.

The method includes: driving the first full-bridge converter to work in a half-bridge mode and the second full-bridge converter to work in a full-bridge mode, and driving the first switching transistor and the second switching transistor to be turned on.

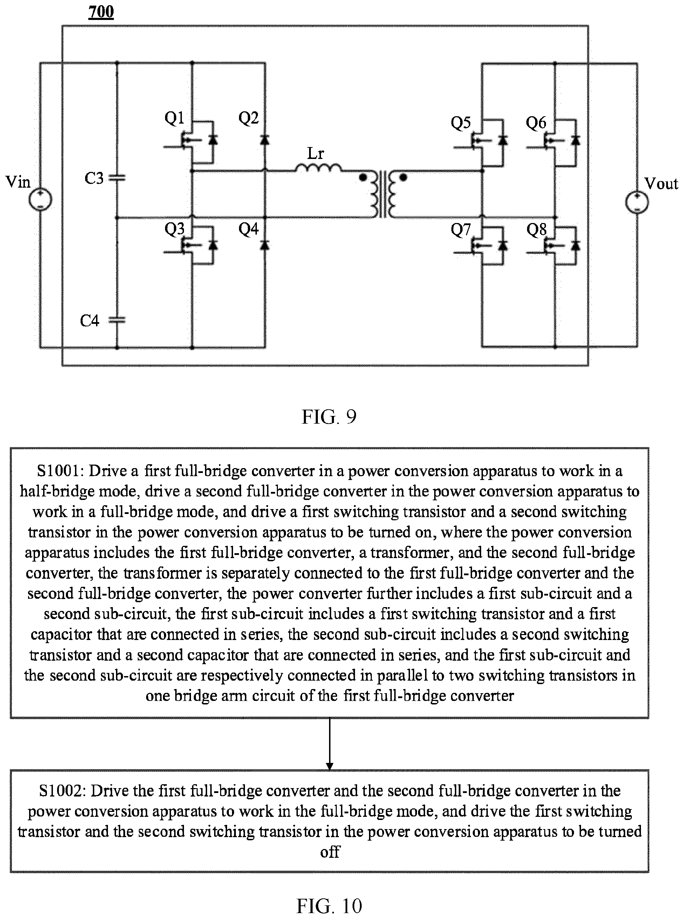

In this application, when the power conversion apparatus is driven, and the first full-bridge converter is driven to work in the half-bridge mode, the switching transistor in the sub-circuit associated with the first full-bridge converter may be driven to be turned on, to drive the capacitor in the sub-circuit to be charged. Therefore, in a case in which the first full-bridge converter is a full-bridge converter connected to an input power supply, the power conversion apparatus can output an output voltage with a smaller gain. In a case in which the first full-bridge converter is a full-bridge converter connected to a load, the power conversion apparatus can output an output voltage with a larger gain. Finally, a gain range of the output voltage of the power conversion apparatus is increased. For example, the method is the driving method shown in FIG. 10.

That the first sub-circuit and the second sub-circuit are respectively connected in parallel to two switching transistors in one bridge arm circuit of the first full-bridge converter may be understood as that one switching transistor in the bridge arm circuit (which is referred to as a first bridge arm circuit) of the first full-bridge converter is connected in parallel to the first sub-circuit, and the other switching transistor is connected in parallel to the second sub-circuit.

With reference to the second aspect, in a first possible implementation, the power conversion apparatus further includes a third sub-circuit and a fourth sub-circuit. The third sub-circuit includes a third switching transistor and a third capacitor that are connected in series, the fourth sub-circuit includes a fourth switching transistor and a fourth capacitor that are connected in series, and the third sub-circuit and the fourth sub-circuit are respectively connected in parallel to two switching transistors in one bridge arm circuit of the second full-bridge converter.

Correspondingly, the method further includes: driving the second full-bridge converter to work in the half-bridge mode and the first full-bridge converter to work in the full-bridge mode, and driving the third switching transistor and the fourth switching transistor to be turned on.

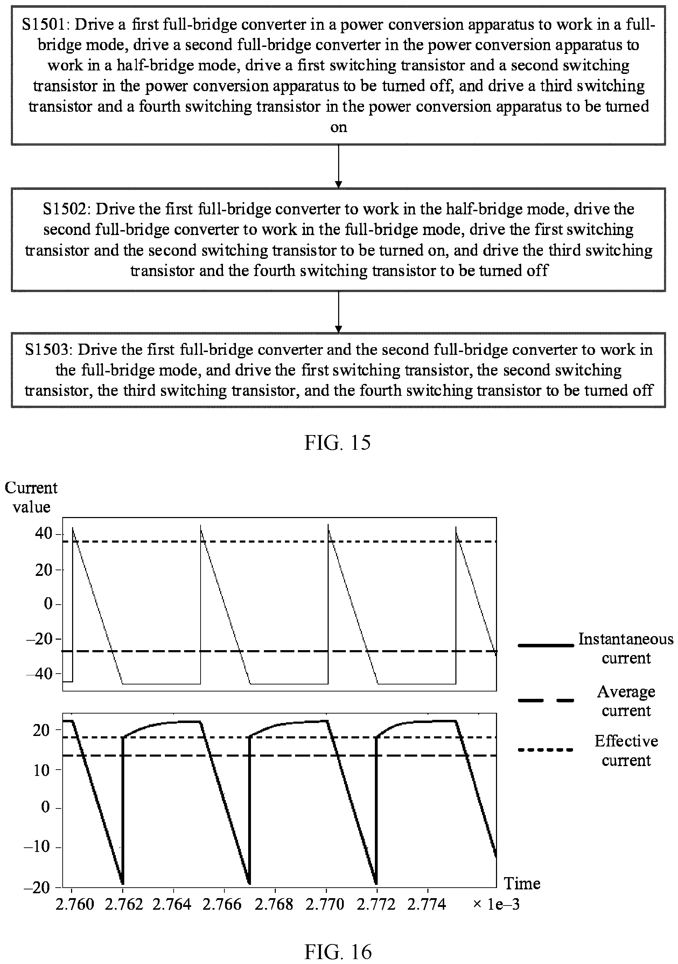

In this implementation, when the second full-bridge converter is driven to work in the half-bridge mode, the switching transistors in the sub-circuits associated with the second full-bridge converter may be driven to be turned on, to drive the capacitors in the sub-circuits to be charged. Therefore, in a case in which the first full-bridge converter is a full-bridge converter connected to the input power supply, the power conversion apparatus can output an output voltage with a larger gain. In a case in which the first full-bridge converter is a full-bridge converter connected to the load, the power conversion apparatus may output an output voltage with a smaller gain. Finally, a gain range of the output voltage of the power conversion apparatus can be increased. For example, the method is the driving method shown in FIG. 15.

That the third sub-circuit and the fourth sub-circuit are respectively connected in parallel to two switching transistors in one bridge arm circuit of the second full-bridge converter may be understood as that one switching transistor in the bridge arm circuit (which is referred to as a second bridge arm circuit) of the second full-bridge converter is connected in parallel to the third sub-circuit, and the other switching transistor is connected in parallel to the fourth sub-circuit.

With reference to the second aspect or the first possible implementation, in a second possible implementation, the first full-bridge converter is configured to connect to the load, and the second full-bridge converter is configured to connect to the input power supply.

With reference to the second aspect or the first possible implementation, in a third possible implementation, the second full-bridge converter is configured to connect to the load, and the first full-bridge converter is configured to connect to the input power supply.

In some possible implementations of the second aspect, the power conversion apparatus may be a DAB converter.

In some other possible implementations, the power conversion apparatus may further include a resonant network. The resonant network is located between the full-bridge converter configured to connect to the input power supply and the transformer.

For example, when the first full-bridge converter is configured to connect to the input power supply, the first full-bridge converter, the resonant network, the transformer, and the second full-bridge converter are sequentially connected to form an LLC converter.

For another example, when the second full-bridge converter is configured to connect to the input power supply, the second full-bridge converter, the resonant network, the transformer, and the first full-bridge converter are sequentially connected to form an LLC converter.

In some possible implementations, the power conversion apparatus in the first aspect or the second aspect may be a power converter.

According to a third aspect, this application provides a drive apparatus of a power conversion apparatus. The drive apparatus may include a processor coupled to a memory. The memory is configured to store program code, and the processor is configured to execute the program code in the memory, to implement the method according to any one of the second aspect or the implementations of the second aspect.

Optionally, the drive apparatus further includes the memory.

When the drive apparatus is a chip applied to a power converter, in some implementations, the drive apparatus may further include a communication interface, configured to communicate with the power conversion apparatus in the power converter, for example, configured to transmit a drive signal to the power conversion apparatus.

According to a fourth aspect, this application provides a computer-readable storage medium. The computer-readable medium stores program code executed by a drive apparatus of a power conversion apparatus, and the program code includes instructions used to implement the method according to any one of the second aspect or the implementations of the second aspect.

According to a fifth aspect, this application provides a computer program product including instructions. When the computer program product runs on a drive apparatus of a power conversion apparatus, the drive apparatus is enabled to implement the method according to any one of the second aspect or the possible implementations of the second aspect.

According to a sixth aspect, this application provides a power converter. The power converter includes the power conversion apparatus according to any one of the first aspect or the possible implementations of the first aspect and the corresponding drive apparatus according to the third aspect.

### BRIEF DESCRIPTION OF DRAWINGS

FIG. 1 is a schematic diagram of an application system of a power converter according to embodiments of this application;
FIG. 2 is a schematic diagram of a structure of an existing DAB converter;
FIG. 3 is a schematic diagram of a structure of an existing LLC converter;
FIG. 4 is a schematic diagram of a structure of a power conversion apparatus according to an embodiment of this application;
FIG. 5 is a schematic diagram of a circuit topology of a power conversion apparatus 400 in a working state;
FIG. 6 is a schematic diagram of a circuit topology of a power conversion apparatus 400 in another working state;
FIG. 7 is a schematic diagram of a structure of a power conversion apparatus according to another embodiment of this application;
FIG. 8 is a schematic diagram of a circuit topology of a power conversion apparatus 700 in a working state;
FIG. 9 is a schematic diagram of a circuit topology of a power conversion apparatus 700 in another working state;
FIG. 10 is a schematic flowchart of a method for driving a power conversion apparatus according to an embodiment of this application;
FIG. 11 is a schematic diagram of a structure of a power conversion apparatus according to still another embodiment of this application;
FIG. 12 is a schematic diagram of a circuit topology of a power conversion apparatus 1100 in a working state;
FIG. 13 is a schematic diagram of a circuit topology of a power conversion apparatus 1100 in another working state;
FIG. 14 is a schematic diagram of a circuit topology of a power conversion apparatus 1100 in still another working state;
FIG. 15 is a schematic flowchart of a method for driving a power conversion apparatus according to another embodiment of this application;
FIG. 16 is a schematic diagram of a working condition of a power conversion apparatus 1100;
FIG. 17 is a schematic diagram of a structure of an LLC power conversion apparatus according to an embodiment of this application;
FIG. 18 is a schematic diagram of a structure of an LLC power conversion apparatus according to another embodiment of this application;
FIG. 19 is a schematic diagram of a structure of an LLC power conversion apparatus according to still another embodiment of this application;
FIG. 20 is a schematic diagram of a working condition of a power conversion apparatus 1900;
FIG. 21 is a schematic diagram of a structure of a drive apparatus according to an embodiment of this application;
FIG. 22 is a schematic diagram of a structure of a drive apparatus according to another embodiment of this application; and
FIG. 23 is a schematic diagram of a structure of a power converter according to an embodiment of this application.

### DESCRIPTION OF EMBODIMENTS

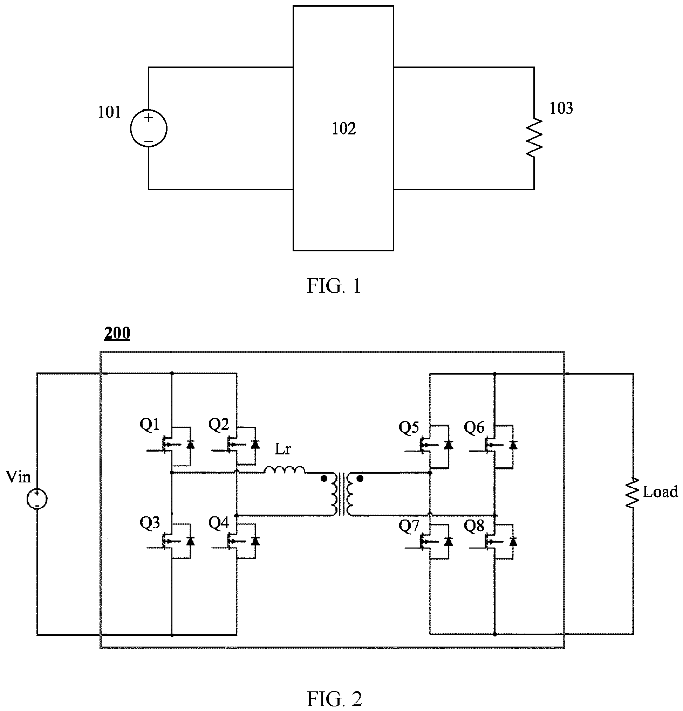

FIG. 1 is a schematic diagram of an application system of a power converter according to an embodiment of this application. As shown in FIG. 1, the application system may include a power supply 101, a power converter 102, and a load 103.

In an example, the power supply 101 provides a direct current. The power converter 102 is configured to convert the direct current provided by the power supply 101. The power converter 102 performs boost or buck conversion on the direct current provided by the power supply, and provides a high-voltage low current or a low-voltage high current for the load 103. In addition, the power converter 102 transmits energy by using a transformer, so that the power supply side is electrically isolated from the load side, and power supply to the system is more secure and reliable. The load 103 works after receiving the direct current output by the power converter 102.

For example, the power converter 102 may be used for a mobile phone adapter, low-voltage bus power supply of an electric vehicle, a power battery, a notebook adapter, a power supply of a desktop host, a server power supply, a communication power supply, or the like.

In the application system of this embodiment, an example of the power converter 102 is a DAB converter. FIG. 2 is an example diagram of a structure of the DAB converter. Another example of the power converter 102 is an LLC converter. FIG. 3 is an example diagram of a structure of the LLC converter.

As shown in FIG. 2, a DAB power converter 200 may include switching transistors Q1 to Q8, an inductor Lr, and a transformer. The switching transistors Q1 to Q4 form a full-bridge converter, and the switching transistors Q5 to Q8 form another full-bridge converter. For ease of description, in this embodiment, the full-bridge converter formed by the switching transistors Q1 to Q4 is referred to as a full-bridge converter 1, and the full-bridge converter formed by the switching transistors Q5 to Q8 is referred to as a full-bridge converter 2.

The switching transistors Q1 and Q3 form one bridge arm circuit of the full-bridge converter 1, and the switching transistors Q2 and Q4 form the other bridge arm circuit of the full-bridge converter 1. The switching transistors Q5 and Q7 form one bridge arm circuit of the full-bridge converter 2, and the switching transistors Q6 and Q8 form the other bridge arm circuit of the full-bridge converter 2.

Parallel ports of the two bridge arm circuits of the full-bridge converter 1 are used as input ports of the full-bridge converter 1, and are configured to connect to an input power supply Vin. Midpoints of the two bridge arm circuits of the full-bridge converter 1 are used as output ports of the full-bridge converter 1, and are configured to connect to a primary-side winding of the transformer.

It may be understood that a midpoint of any bridge arm circuit of any full-bridge converter described in embodiments of this application is not limited to a physical midpoint of the bridge arm circuit, but is any point on a connection line between two switching transistors in the bridge arm circuit.

The transformer includes the primary-side winding and a secondary-side winding, and a transformation ratio of the transformer may be denoted as K.

Midpoints of the two bridge arm circuits of the full-bridge converter 2 are used as input ports of the full-bridge converter 2, and are configured to connect to the secondary-side winding of the transformer. Parallel ports of the two bridge arm circuits of the full-bridge converter 2 are used as output ports of the full-bridge converter 2, are configured to connect to the load, and are used as a power supply of the load.

In this embodiment, the full-bridge converter 1 may also be referred to as an input full-bridge converter, and the full-bridge converter 2 may also be referred to as an output full-bridge converter.

The full-bridge converter 1 and the full-bridge converter 2 in the DAB converter may respectively work in a half-bridge mode and a full-bridge mode. For example, when all the switching transistors Q1 to Q8 are turned on, the full-bridge converter 1 works in the half-bridge mode, and the full-bridge converter 2 works in the full-bridge mode. In this example, a rated gain of a direct current output by the full-bridge converter 2 is 1 K. When the gain ranges from 0.7 K to 1.4 K, efficiency of the DAB converter is high. K is the transformation ratio of the transformer.

As shown in FIG. 3, an LLC power converter 300 may include switching transistors Q1 to Q8, a capacitor Cr, an inductor Lr, and a transformer.

The switching transistors Q1 to Q4 form a full-bridge converter, the switching transistors Q5 to Q8 form another full-bridge converter, and the inductor Lr and the capacitor Cr form a resonant network. For ease of description, in this embodiment, the full-bridge converter formed by the switching transistors Q1 to Q4 is referred to as a full-bridge converter 1, and the full-bridge converter formed by the switching transistors Q5 to Q8 is referred to as a full-bridge converter 2.

Parallel ports of two bridge arm circuits of the full-bridge converter 1 are used as input ports of the full-bridge converter 1, and are configured to connect to a power supply Vin. Midpoints of the two bridge arm circuits of the full-bridge converter 1 are used as output ports of the full-bridge converter 1, where one output port is connected to one port of a primary-side winding of the transformer through the resonant network, and the other output port is connected to the other port of the primary-side winding of the transformer.

The transformer includes the primary-side winding and a secondary-side winding, and a transformation ratio of the transformer may be denoted as K.

Midpoints of the two bridge arm circuits of the full-bridge converter 2 are used as input ports of the full-bridge converter 2, and are configured to connect to the secondary-side winding of the transformer. Parallel ports of the two bridge arm circuits of the full-bridge converter 2 are used as output ports of the full-bridge converter 2, are configured to connect to a load R, and are used as a power supply to output a direct current to the load R.

In this embodiment, the full-bridge converter 1 may also be referred to as an input full-bridge converter, and the full-bridge converter 2 may also be referred to as an output full-bridge converter.

The full-bridge converter 1 and the full-bridge converter 2 in the LLC converter may separately work in a full-bridge mode. For example, when all the switching transistors Q1 to Q8 are turned on, the full-bridge converter 1 and the full-bridge converter 2 work in the full-bridge mode. In this example, a rated gain of a direct current output by the full-bridge converter 2 is 1 K. When the gain ranges from 0.5 K to 1.4 K, efficiency of the LLC converter is high. K is the transformation ratio of the transformer.

A gain range of an output voltage of an existing power converter is small. For example, the gain range of the DAB converter shown in FIG. 2 is 0.7 K to 1.4 K, and the gain range of the LLC converter shown in FIG. 3 is 0.5 K to 1.4 K. However, the field of electronic systems has an increasingly high requirement for a gain range of a same power converter, that is, requires a larger gain range of the power converter.

To resolve the foregoing problem, this application provides a power conversion apparatus that can provide a larger gain range. In the power conversion apparatus provided in this application, a new circuit is separately connected in parallel to two switching transistors in one bridge arm circuit of each of at least one of an input converter and an output converter. The circuit includes a switching transistor and an energy storage component. An example of the energy storage component is a capacitor.

With reference to the accompanying drawings, the following describes a power conversion apparatus provided in this application and a method for driving the power conversion apparatus.

FIG. 4 is a schematic diagram of a structure of a power conversion apparatus according to an embodiment of this application. As shown in FIG. 4, a power conversion apparatus 400 includes switching transistors Q1 to Q10, an inductor Lr, a converter, a capacitor C1, and a capacitor C2.

The switching transistors Q1 to Q4 form a full-bridge converter, and the switching transistors Q5 to Q8 form another full-bridge converter. For ease of description, in this embodiment, the full-bridge converter formed by the switching transistors Q5 to Q8 is referred to as a first full-bridge converter, and the full-bridge converter formed by the switching transistors Q1 to Q4 is referred to as a second full-bridge converter. The second full-bridge converter may also be referred to as an input full-bridge converter, that is, a full-bridge converter configured to connect to a power supply. The first full-bridge converter may also be referred to as an output full-bridge converter, that is, a full-bridge converter configured to connect to a load and provide a power supply for the load.

A circuit formed by connecting the switching transistor Q9 and the capacitor C1 in series is referred to as a first sub-circuit, and a circuit formed by connecting the switching transistor Q10 and the capacitor C2 in series is referred to as a second sub-circuit.

In the input full-bridge converter, one bridge arm circuit includes the switching transistors Q1 and Q3, and the other bridge arm circuit includes the switching transistors Q2 and Q4.

In the output full-bridge converter, one bridge arm circuit includes the switching transistors Q5 and Q7, and the other bridge arm circuit includes the switching transistors Q6 and Q8. The switching transistor Q6 is connected in parallel to the first sub-circuit, and the switching transistor Q8 is connected in parallel to the second sub-circuit.

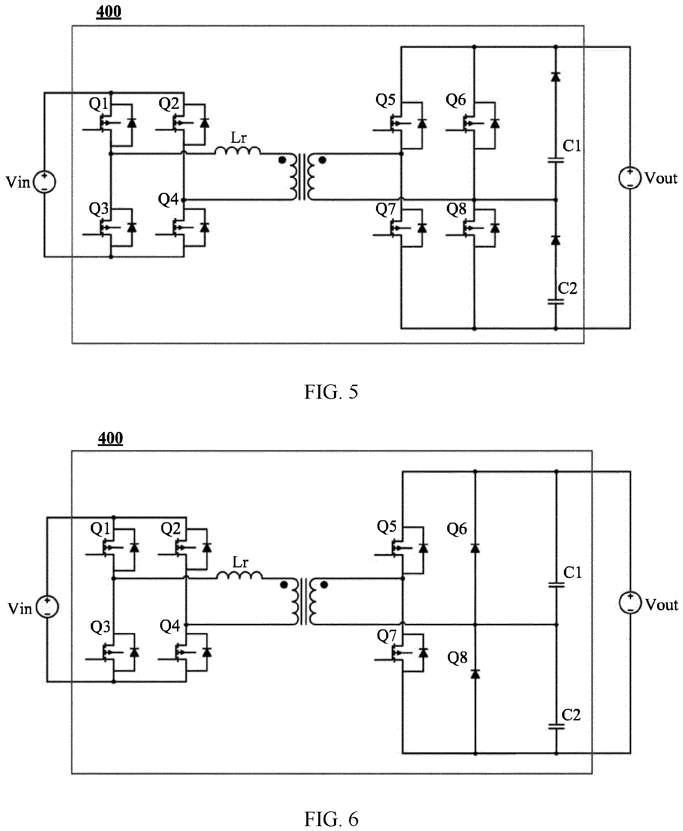

In the power conversion apparatus 400, a circuit topology structure formed when Q1 to Q8 are turned on and Q9 and Q10 are turned off is shown in FIG. 5. It can be learned from FIG. 5 that, both the output full-bridge converter and the input full-bridge converter work in a full-bridge mode. In addition, the capacitors C1 and C2 cannot be charged. Therefore, when the power conversion apparatus 400 has a rated gain K between an output voltage Vout and an input voltage Vin, and the gain is within a range from 0.7 K to 1.4 K, the power conversion apparatus 400 has high efficiency. K is a transformation ratio of the transformer.

In the power conversion apparatus 400, a circuit topology structure formed when Q1 to Q4, Q5, Q7, Q9, and Q10 are turned on and Q6 and Q8 are turned off is shown in FIG. 6. It can be learned from FIG. 6 that the input full-bridge converter works in the full-bridge mode, and the output full-bridge converter works in a half-bridge mode. In this case, the capacitors C1 and C2 divide an output voltage Vout of the power conversion apparatus 400 into two halves, so that a voltage loaded on an output port of the transformer is one half of the Vout. When the power conversion apparatus 400 works at a rated point, an input voltage Vin is balanced with one half of the output voltage Vout. Therefore, when the rated gain of the power conversion apparatus 400 is 2 K, and the gain is within a range from 1.4 K to 2.8 K, the power conversion apparatus 400 has high efficiency. K is a transformation ratio of the transformer.

It may be learned from the foregoing analysis that the power conversion apparatus 400 shown in FIG. 4 in different working modes may provide gains in different ranges. Therefore, the switching transistors in the power conversion apparatus 400 may be driven to be turned on or off based on a correspondence between a gain requirement and each working mode of the power conversion apparatus 400, so that the power conversion apparatus can output a voltage that meets the gain requirement. FIG. 10 is a flowchart of an example of a method for driving the power conversion apparatus 400.

FIG. 7 is a schematic diagram of a structure of a power conversion apparatus according to another embodiment of this application. As shown in FIG. 7, a power conversion apparatus 700 includes switching transistors Q1 to Q8, a switching transistor Q11, a switching transistor Q12, an inductor Lr, a converter, a capacitor C3, and a capacitor C4.

A connection relationship between the switching transistors Q1 to Q8, the inductor Lr, and the converter in the power conversion apparatus 700 is the same as a connection relationship between the switching transistors Q1 to Q8, the inductor Lr, and the converter in the power conversion apparatus 400. Details are not described herein again.

Different from the power conversion apparatus 400, in the power conversion apparatus 700, an input full-bridge converter formed by the switching transistors Q1 to Q4 is referred to as a first full-bridge converter, an output full-bridge converter formed by the switching transistors Q5 to Q8 is referred to as a second full-bridge converter, the switching transistor Q11 is referred to as a first switching transistor, the switching transistor Q12 is referred to as a second switching transistor, the capacitor C3 is referred to as a first capacitor, the capacitor C4 is referred to as a second capacitor, a circuit formed by connecting the switching transistor Q9 and the capacitor C3 in series is referred to as a first sub-circuit, and a circuit formed by connecting the switching transistor Q12 and the capacitor C4 in series is referred to as a second sub-circuit. In addition, the switching transistor Q2 in the input full-bridge converter is connected in parallel to the first sub-circuit, and the switching transistor Q4 in the input full-bridge converter is connected in parallel to the second sub-circuit.

In the power conversion apparatus 700, a circuit topology structure formed when Q1 to Q8 are turned on and Q11 and Q12 are turned off is shown in FIG. 8. It can be learned from FIG. 8 that, both the output full-bridge converter and the input full-bridge converter work in a full-bridge mode. In addition, the capacitors C3 and C4 cannot be charged. Therefore, when the power conversion apparatus 700 has a rated gain K between an output voltage Vout and an input voltage Vin, and the gain is within a range from 0.7 K to 1.4 K, the power conversion apparatus 700 has high efficiency. K is a transformation ratio of the transformer.

In the power conversion apparatus 700, a circuit topology structure formed when Q5 to Q8, Q1, Q3, Q11, and Q12 are turned on and Q2 and Q4 are turned off is shown in FIG. 9. It can be learned from FIG. 9 that the output full-bridge converter works in the full-bridge mode, and the input full-bridge converter works in a half-bridge mode. In this case, the capacitors C3 and C4 connected in series divide an input voltage Vin into two halves, so that a voltage loaded on an auxiliary inductor port of the transformer is one half of the input voltage Vin. When the circuit works at a rated point, an output voltage Vout of the power conversion apparatus 700 is balanced with one half of the input voltage Vin. Therefore, when the rated gain of 700 is 0.5 K, and the gain is within a range from 0.35 K to 0.7 K, the power conversion apparatus 700 has high working efficiency. K is a transformation ratio of the transformer.

It may be learned from the foregoing analysis that the power conversion apparatus 700 shown in FIG. 7 in different working modes may provide gains in different ranges. Therefore, the switching transistors in the power conversion apparatus 700 may be driven to be turned on or off based on a correspondence between a gain requirement and each working mode of the power conversion apparatus 700, so that the power conversion apparatus can output a voltage that meets the gain requirement. FIG. 10 is a flowchart of an example of a method for driving the power conversion apparatus 700.

FIG. 10 is a schematic flowchart of a method for driving a power conversion apparatus according to an embodiment of this application. The power conversion apparatus includes a first full-bridge converter, a transformer, and a second full-bridge converter. The transformer is separately connected to the first full-bridge converter and the second full-bridge converter. In addition, the power converter further includes a first sub-circuit and a second sub-circuit. The first sub-circuit includes a first switching transistor and a first capacitor that are connected in series, the second sub-circuit includes a second switching transistor and a second capacitor that are connected in series, and the first sub-circuit and the second sub-circuit are respectively connected in parallel to two switching transistors in one bridge arm circuit of the first full-bridge converter. The driving method may include S1001, and optionally, may further include S1002.

The driving method may be performed by a drive apparatus, and the drive apparatus may be implemented by a processor. The drive apparatus may be integrated with the power conversion apparatus driven by the drive apparatus, or may be connected, through a signal interface, to the power conversion apparatus driven by the drive apparatus.

S1001: Drive the first full-bridge converter in the power conversion apparatus to work in a half-bridge mode, drive the second full-bridge converter in the power conversion apparatus to work in a full-bridge mode, and drive the first switching transistor and the second switching transistor in the power conversion apparatus to be turned on.

In some possible implementations, the drive apparatus may drive, based on a gain requirement, the first full-bridge converter in the power conversion apparatus to work in the half-bridge mode, drive the second full-bridge converter to work in the full-bridge mode, and drive, based on the gain requirement, the first switching transistor and the second switching transistor in the power conversion apparatus to be turned on.

For example, when the power conversion apparatus is the power conversion apparatus 400, and the gain requirement is within a range from 1.4 K to 2.8 K, the drive apparatus may send, to the switching transistors Q1 to Q4, drive signals that enable the switching transistors Q1 to Q4 to be turned on, send, to the switching transistors Q5 and Q7, signals that enable the switching transistors Q5 and Q7 to be turned on, send, to the switching transistors Q6 and Q8, signals that enable the switching transistors Q6 and Q8 to be turned off, and send, to the switching transistors Q9 and Q10, signals that enable the switching transistors Q9 and Q10 to be turned on. In this case, an equivalent circuit topology structure of the power conversion apparatus 400 is shown in FIG. 6.

In this case, the input full-bridge converter formed by the switching transistors Q1 to Q4 works in the full-bridge mode, the output full-bridge converter formed by the switching transistors Q5 to Q8 works in the half-bridge mode, and the capacitor C1 and the capacitor C2 can be charged. Therefore, the power conversion apparatus 400 may provide the output voltage with a gain range from 1.4 K to 2.8 K.

For another example, when the power conversion apparatus is the power conversion apparatus 700, and the gain requirement is within a range from 0.35 K to 0.7 K, the drive apparatus may send, to the switching transistors Q5 to Q8, drive signals that enable the switching transistors Q5 to Q8 to be turned on, send, to the switching transistors Q1 and Q3, signals that enable the switching transistors Q1 and Q3 to be turned on, send, to the switching transistors Q2 and Q4, signals that enable the switching transistors Q2 and Q4 to be turned off, and send, to the switching transistors Q11 and Q12, signals that enable the switching transistors Q11 and Q12 to be turned on. In this case, an equivalent circuit topology structure of the power conversion apparatus 700 is shown in FIG. 9.

In this case, the output full-bridge converter formed by the switching transistors Q5 to Q8 works in the full-bridge mode, the input full-bridge converter formed by the switching transistors Q1 to Q4 works in the half-bridge mode, and the capacitor C3 and the capacitor C4 can be charged. Therefore, the power conversion apparatus 700 may provide the output voltage with a gain range from 0.35 K to 0.7 K.

S 1002: Drive the first full-bridge converter and the second full-bridge converter in the power conversion apparatus to work in the full-bridge mode, and drive the first switching transistor and the second switching transistor in the power conversion apparatus to be turned off.

In some possible implementations, the drive apparatus may drive, based on a gain requirement, the first full-bridge converter and the second full-bridge converter in the power conversion apparatus to work in the full-bridge mode, and drive, based on the gain requirement, the first switching transistor and the second switching transistor in the power conversion apparatus to be turned off.

For example, when the power conversion apparatus is the power conversion apparatus 400, and the gain requirement is within a range from 0.7 K to 1.4 K, the drive apparatus may send, to the switching transistors Q1 to Q8, drive signals that enable the switching transistors Q1 to Q8 to be turned on, and send, to the switching transistors Q9 and Q10, signals that enable the switching transistors Q9 and Q10 to be turned off. In this case, an equivalent circuit topology structure of the power conversion apparatus 400 is shown in FIG. 5.

In this case, both the input full-bridge converter formed by the switching transistors Q1 to Q4 and the output full-bridge converter formed by the switching transistors Q5 to Q8 work in the full-bridge mode, and the capacitor C1 and the capacitor C2 cannot be charged. Therefore, the power conversion apparatus 400 may provide the output voltage with a gain range from 0.7 K to 1.4 K.

For another example, when the power conversion apparatus is the power conversion apparatus 700, and the gain requirement is within a range from 0.7 K to 1.4 K, the drive apparatus may send, to the switching transistors Q5 to Q8, drive signals that enable the switching transistors Q5 to Q8 to connect, send, to the switching transistors Q1 to Q4, signals that enable the switching transistors Q1 to Q4 to connect, and send, to the switching transistors Q11 and Q12, signals that enable the switching transistors Q11 and Q12 to turn off. In this case, an equivalent circuit topology structure of the power conversion apparatus 700 is shown in FIG. 8.

In this case, the output full-bridge converter formed by the switching transistors Q5 to Q8 works in the full-bridge mode, the input full-bridge converter formed by the switching transistors Q1 to Q4 works in the full-bridge mode, and the capacitor C3 and the capacitor C4 cannot be charged. Therefore, the power conversion apparatus 700 may provide the output voltage with the gain range from 0.7 K to 1.4 K.

It may be understood that the gain requirement of the power conversion apparatus may be fixed. In this case, a method for driving each component in the power conversion apparatus by the drive apparatus may also be preset, without dynamically learning a gain requirement and dynamically driving the power conversion apparatus based on the gain requirement.

The foregoing embodiment describes a method for driving the power conversion apparatus by respectively connecting a switching transistor and a capacitor in parallel to two switching transistors in one bridge arm circuit of the first full-bridge converter of the power conversion apparatus, to increase the gain range of the output voltage of the power conversion apparatus. With reference to FIG. 11 to FIG. 15, the following describes a power conversion apparatus with a larger gain range provided in this application.

In the power conversion apparatus with a larger gain range provided in this application, not only a switching transistor and a capacitor are connected in parallel to two switching transistors in one bridge arm circuit of a first full-bridge converter, but also a switching transistor and a capacitor are connected in parallel to two switching transistors in one bridge arm circuit of a second full-bridge converter.

As shown in FIG. 11, a power conversion apparatus 1100 includes switching transistors Q1 to Q12, an inductor Lr, a converter, and capacitors C1 to C4.

The switching transistors Q5 to Q8 form a full-bridge converter. For ease of description, the full-bridge converter is referred to as a first full-bridge converter or an output full-bridge converter. In the first full-bridge converter, the switching transistors Q5 and Q7 form one bridge arm circuit, and the switching transistors Q6 and Q8 form the other bridge arm circuit. The first full-bridge converter is configured to connect to a load, and output a voltage Vout to the load.

The switching transistors Q1 to Q4 form a full-bridge converter. For ease of description, the full-bridge converter is referred to as a second full-bridge converter or an input full-bridge converter. In the second full-bridge converter, the switching transistors Q1 and Q3 form one bridge arm circuit, and the switching transistors Q2 and Q4 form the other bridge arm circuit. The second full-bridge converter is configured to connect to a power supply Vin.

A circuit formed by connecting the switching transistor Q9 and the capacitor C1 in series is referred to as a first sub-circuit, and the capacitor C1 is referred to as a first capacitor. A circuit formed by connecting the switching transistor Q10 and the capacitor C2 in series is referred to as a second sub-circuit, and the capacitor C2 is referred to as a second capacitor. A circuit formed by connecting the switching transistor Q11 and the capacitor C3 in series is referred to as a third sub-circuit, and the capacitor C3 is referred to as a third capacitor. A circuit formed by connecting the switching transistor Q12 and the capacitor C4 in series is referred to as a fourth sub-circuit, and the capacitor C4 is referred to as a fourth capacitor.

A connection relationship between the first full-bridge converter, the inductor Lr, the converter, and the second full-bridge converter in the power conversion apparatus 1100 is the same as a connection relationship between the first full-bridge converter, the inductor Lr, the converter, and the second full-bridge converter in the power conversion apparatus 400. Details are not described herein again.

In the power conversion apparatus 1100, the switching transistor Q6 in the first full-bridge converter is connected in parallel to the first sub-circuit, and the switching transistor Q8 is connected in parallel to the second sub-circuit.

In the power conversion apparatus 1100, the switching transistor Q2 in the second full-bridge converter is connected in parallel to the third sub-circuit, and the switching transistor Q4 is connected in parallel to the fourth sub-circuit.

In the power conversion apparatus 1100, a circuit topology structure formed when Q5 to Q8, Q1, Q3, Q11, and Q12 are turned on and Q2, Q4, Q9, and Q10 are turned off is shown in FIG. 12. It can be learned from FIG. 12 that the output full-bridge converter works in the full-bridge mode, the input full-bridge converter works in a half-bridge mode, and C3 and C4 can be charged. In this case, the capacitors C3 and C4 divide an input voltage Vin into two halves, so that a voltage loaded on an auxiliary inductor port of the transformer is one half of the input voltage Vin. When the circuit works at a rated point, an output voltage Vout of the power conversion apparatus 700 is balanced with one half of the input voltage Vin. Therefore, when the rated gain of 700 is 0.5 K, and the gain is within a range from 0.35 K to 0.7 K, the power conversion apparatus 700 has high working efficiency. K is a transformation ratio of the transformer.

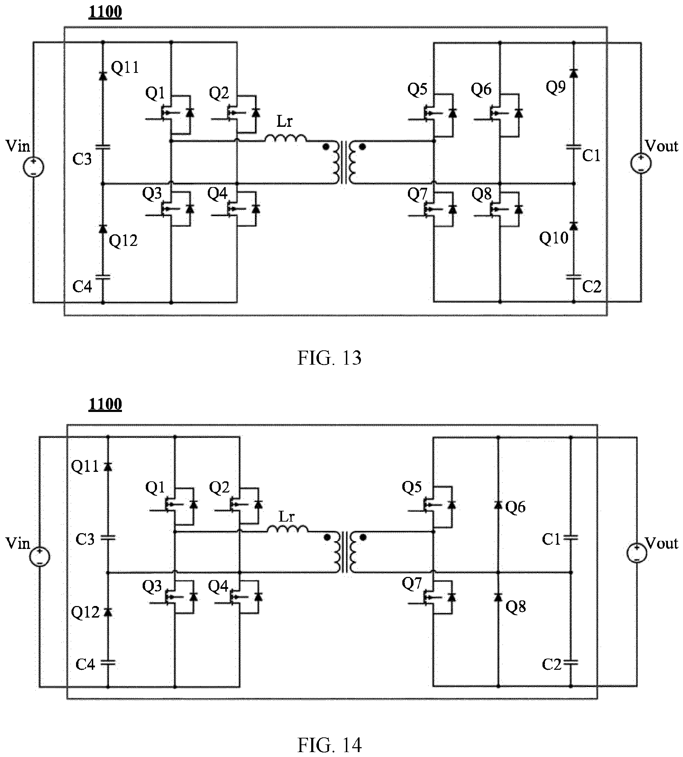

In the power conversion apparatus 1100, a circuit topology structure formed when Q1 to Q8 are turned on and Q9 to Q12 are turned off is shown in FIG. 13. It can be learned from FIG. 13 that the input full-bridge converter and the output full-bridge converter work in the full-bridge mode, and C1 to C4 cannot be charged. In this case, a gain range of the power conversion apparatus 1100 is 0.7 K to 1.4 K.

In the power conversion apparatus 1100, a circuit topology structure formed when Q1 to Q4, Q5, Q7, Q9, and Q10 are turned on and Q6, Q8, Q11, and Q12 are turned off is shown in FIG. 14. It can be learned from FIG. 14 that the input full-bridge converter works in the full-bridge mode, the output full-bridge converter works in the half-bridge mode, C1 and C2 can be charged, and C3 and C4 cannot be charged. In this case, the capacitors C1 and C2 divide an output voltage Vout of the power conversion apparatus 400 into two halves, so that a voltage loaded on an output port of the transformer is one half of the Vout. When the power conversion apparatus 400 works at a rated point, an input voltage Vin is balanced with one half of the output voltage Vout. Therefore, when the rated gain of the power conversion apparatus 400 is 2 K, and the gain is within a range from 1.4 K to 2.8 K, the power conversion apparatus 400 has high efficiency. K is a transformation ratio of the transformer.

It may be learned from the foregoing analysis that the power conversion apparatus 1100 shown in FIG. 11 in different working modes may provide gains in different ranges. Therefore, the switching transistors in the power conversion apparatus 1100 may be driven to be turned on or off based on a correspondence between a gain requirement and each working mode of the power conversion apparatus 1100, so that the power conversion apparatus can output a voltage that meets the gain requirement. FIG. 15 is a flowchart of an example of a method for driving the power conversion apparatus 1100.

FIG. 15 is another schematic flowchart of a method for driving a power conversion apparatus according to an embodiment of this application. The power conversion apparatus includes a first full-bridge converter, a transformer, and a second full-bridge converter. The transformer is separately connected to the first full-bridge converter and the second full-bridge converter. The first full-bridge converter is configured to connect to a load and output a voltage to the load. The second full-bridge converter is configured to connect to a power supply.

In addition, the power converter further includes a first sub-circuit, a second sub-circuit, a third sub-circuit, and a fourth sub-circuit. The first sub-circuit includes a first switching transistor and a first capacitor that are connected in series, the second sub-circuit includes a second switching transistor and a second capacitor that are connected in series, the third sub-circuit includes a third switching transistor and a third capacitor that are connected in series, the fourth sub-circuit includes a fourth switching transistor and a fourth capacitor that are connected in series, the first sub-circuit and the second sub-circuit are respectively connected in parallel to two switching transistors in one bridge arm circuit of the first full-bridge converter, and the third sub-circuit and the fourth sub-circuit are respectively connected in parallel to two switching transistors in one bridge arm circuit of the second full-bridge converter.

The driving method may include S1501 and/or S1502, and optionally, may further include S1503.

The driving method may be performed by a drive apparatus, and the drive apparatus may be implemented by a processor. The drive apparatus may be integrated with the power conversion apparatus driven by the drive apparatus, or may be connected, through a signal interface, to the power conversion apparatus driven by the drive apparatus.

S1501: Drive the first full-bridge converter in the power conversion apparatus to work in a full-bridge mode, drive the second full-bridge converter in the power conversion apparatus to work in a half-bridge mode, drive the first switching transistor and the second switching transistor in the power conversion apparatus to be turned off, and drive the third switching transistor and the fourth switching transistor in the power conversion apparatus to be turned on.

In some possible implementations, the drive apparatus may drive, based on a gain requirement, the first full-bridge converter in the power conversion apparatus to work in the full-bridge mode, drive the second full-bridge converter to work in the half-bridge mode, drive, based on the gain requirement, the first switching transistor and the second switching transistor in the power conversion apparatus to be turned off, and drive the third switching transistor and the fourth switching transistor in the power conversion apparatus to be turned on.

For example, when the power conversion apparatus is the power conversion apparatus 1100, and the gain requirement is between 0.35 K and 0.7 K, the drive apparatus may send, to the switching transistors Q5 to Q8, drive signals that enable the switching transistors Q5 to Q8 to be turned on, send, to the switching transistors Q1 and Q3, signals that enable the switching transistors Q1 and Q3 to be turned on, send, to the switching transistors Q2 and Q4, signals that enable the switching transistors Q2 and Q4 to be turned off, send, to the switching transistors Q11 and Q12, signals that enable the switching transistors Q11 and Q12 to be turned on, and send, to the switching transistors Q9 and Q10, signals that enable the switching transistors Q9 and Q10 to be turned off. In this case, an equivalent circuit topology structure of the power conversion apparatus 1100 is shown in FIG. 12.

S1502: Drive the first full-bridge converter to work in the half-bridge mode, drive the second full-bridge converter to work in the full-bridge mode, drive the first switching transistor and the second switching transistor to be turned on, and drive the third switching transistor and the fourth switching transistor to be turned off.

In some possible implementations, the drive apparatus may drive, based on a gain requirement, the first full-bridge converter in the power conversion apparatus to work in the half-bridge mode, drive the second full-bridge converter to work in the full-bridge mode, drive, based on the gain requirement, the first switching transistor and the second switching transistor in the power conversion apparatus to be turned on, and drive the third switching transistor and the fourth switching transistor to be turned off.

For example, when the power conversion apparatus is the power conversion apparatus 1100, and the gain requirement is within a range from 1.4 K to 2.8 K, the drive apparatus may send, to the switching transistors Q1 to Q4, drive signals that enable the switching transistors Q1 to Q4 to be turned on, send, to the switching transistors Q5 and Q7, signals that enable the switching transistors Q5 and Q7 to be turned on, send, to the switching transistors Q6 and Q8, signals that enable the switching transistors Q6 and Q8 to be turned off, send, to the switching transistors Q9 and Q10, signals that enable the switching transistors Q9 and Q10 to be turned on, and send, to the switching transistors Q11 and Q12, signals that enable the switching transistors Q11 and Q12 to be turned off. In this case, an equivalent circuit topology structure of the power conversion apparatus 1100 is shown in FIG. 14.

S1503: Drive the first full-bridge converter and the second full-bridge converter to work in the full-bridge mode, and drive the first switching transistor, the second switching transistor, the third switching transistor, and the fourth switching transistor to be turned off.

In some possible implementations, the drive apparatus may drive, based on a gain requirement, the first full-bridge converter and the second full-bridge converter in the power conversion apparatus to work in the full-bridge mode, and drive, based on the gain requirement, the first switching transistor, the second switching transistor, the third switching transistor, and the fourth switching transistor in the power conversion apparatus to be turned off.

For example, when the power conversion apparatus is the power conversion apparatus 1100, and the gain requirement is within a range from 0.7 K to 1.4 K, the drive apparatus may send, to the switching transistors Q1 to Q8, drive signals that enable the switching transistors Q1 to Q8 to be turned on, and send, to the switching transistors Q9 to Q12, signals that enable the switching transistors Q9 to Q12 to be turned off. In this case, an equivalent circuit topology structure of the power conversion apparatus 1100 is shown in FIG. 13.

It may be understood that the gain requirement of the power conversion apparatus may be fixed. In this case, a method for driving each component in the power conversion apparatus by the drive apparatus may also be preset, without dynamically learning a gain requirement and dynamically driving the power conversion apparatus based on the gain requirement.

When the input voltage Vin is 300 volts (V), the transformation ratio K = 1, and the gain is 2 K, that is, when the equivalent circuit topology structure of the power conversion apparatus 1100 is shown in FIG. 14, a working condition of the power conversion apparatus 1100 is shown in FIG. 16. In this working condition, the output voltage is 600 V

The upper figure in FIG. 16 is a schematic diagram of an input current, and the lower figure in FIG. 16 is a schematic diagram of an output current.

It can be learned from FIG. 16 that a maximum turn-off current of the switching transistor is 45 amperes (A), an effective value of the input current is close to 30 A, and the effective value of the output current is only 14 A. It can be learned that when the power conversion apparatus in this application outputs a current of 600 V, both an effective value and a peak value of the current are ideal.

In this application, the power conversion apparatus shown in any one of FIG. 4, FIG. 7, and FIG. 11 may be referred to as a reconstructed DAB power conversion apparatus.

Optionally, in the power conversion apparatus shown in any one of FIG. 4, FIG. 7, and FIG. 11, a capacitor Cr may be further added, so that the capacitor Cr and the inductor Lr form a resonant network. The power conversion apparatus including the resonant network may be referred to as a reconstructed LLC power conversion apparatus. Three example structures of the reconstructed LLC power conversion apparatus are shown in FIG. 17, FIG. 18, and FIG. 19 respectively.

A gain range of a power conversion apparatus 1700 shown in FIG. 17 is 0.7 K to 2.8 K. For a method for driving the power conversion apparatus 1700, refer to the driving method shown in FIG. 10. For example, when a gain requirement is within a range from 1.4 K to 2.8 K, S1001 may be performed to drive the power conversion apparatus 1700. When the gain requirement is within a range from 0.7 K to 1.4 K, S1002 may be performed to drive the power conversion apparatus 1700.

A gain range of a power conversion apparatus 1800 shown in FIG. 18 is 0.35 K to 1.4 K. For a method for driving the power conversion apparatus 1800, refer to the driving method shown in FIG. 10. For example, when the gain requirement is within a range from 0.35 K to 0.7 K, S1001 may be performed to drive the power conversion apparatus 1800. When the gain requirement is within a range from 0.7 K to 1.4 K, S1002 may be performed to drive the power conversion apparatus 1800.

A gain range of a power conversion apparatus 1900 shown in FIG. 19 is 0.35 K to 2.8 K. For a method for driving the power conversion apparatus 1900, refer to the driving method shown in FIG. 15. For example, when the gain requirement is within a range from 1.4 K to 2.8 K, S1501 may be performed to drive the power conversion apparatus 1900. When the gain requirement is within a range from 0.35 K to 0.7 K, S1502 may be performed to drive the power conversion apparatus 1900. When the gain requirement is within a range from 0.7 K to 1.4 K, S1503 may be performed to drive the power conversion apparatus 1900.

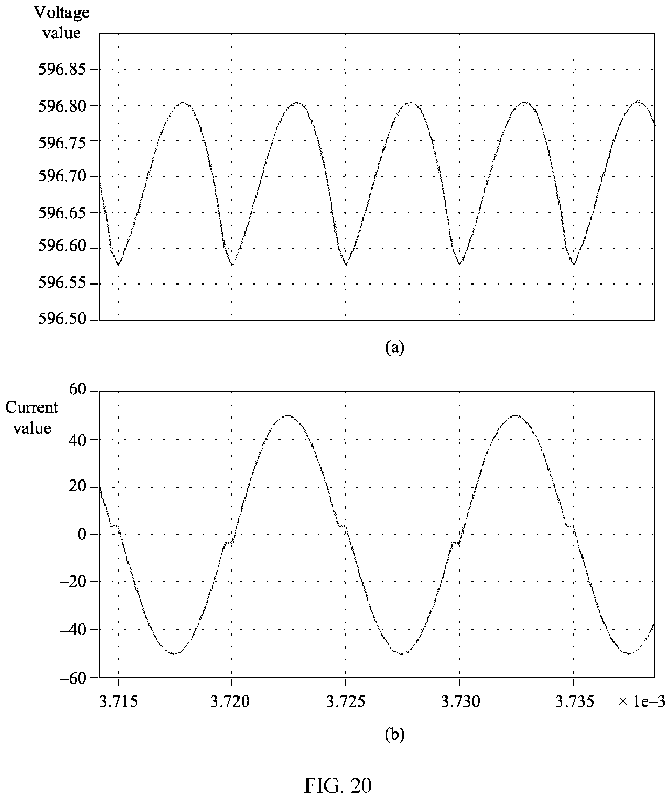

When the input voltage Vin is 300 volts (V), the transformation ratio K = 1, and the gain is 2 K, a working condition of the power conversion apparatus 1900 is shown in FIG. 20. In this working condition, the output voltage is 600 V

(a) in FIG. 20 is a schematic diagram of an output voltage, and (b) in FIG. 20 is a schematic diagram of an output current. It can be learned from FIG. 20 that, in this application, conversion efficiency is also quite high when the gain of the power conversion apparatus 1900 is 2.

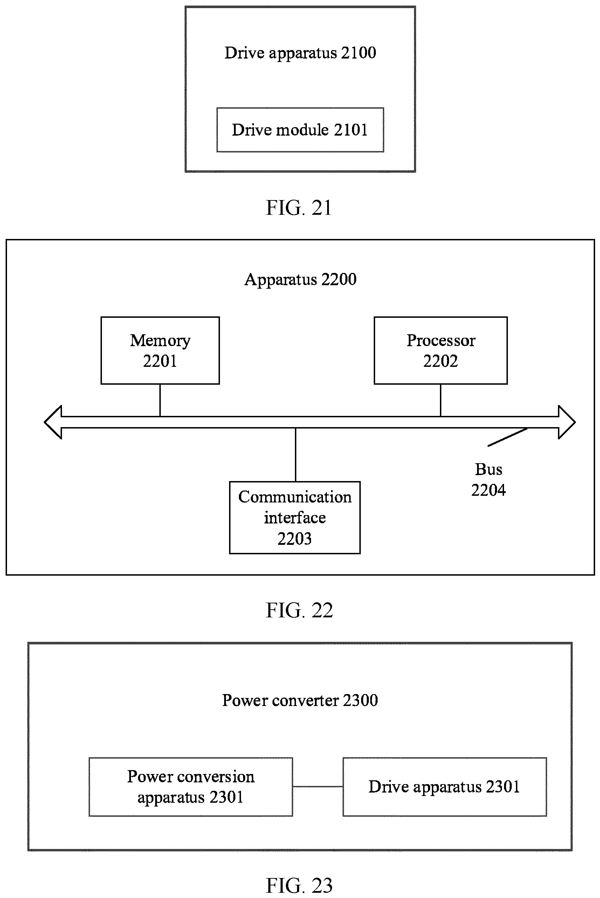

FIG. 21 is a schematic diagram of a structure of a drive apparatus according to an embodiment of this application. As shown in FIG. 21, an apparatus 2100 may include a drive module 2101. The drive module 2101 may also be referred to as a drive unit 2101. Functions of the drive module 2101 may be implemented by using a processor.

In an implementation, the apparatus 2100 may be configured to implement the method shown in FIG. 10. For example, the drive module 2101 may be configured to implement functions in S1001 and S1002.

In an implementation, the apparatus 2100 may be configured to implement the method shown in FIG. 15. For example, the drive module 2101 may be configured to implement functions in S1501, S1502, and S1503.

FIG. 22 is a schematic diagram of a structure of a drive apparatus according to another embodiment of this application. An apparatus 2200 shown in FIG. 22 may be configured to perform the method in FIG. 10 or FIG. 15.

As shown in FIG. 22, the apparatus 2200 in this embodiment includes a memory 2201, a processor 2202, a communication interface 2203, and a bus 2204. The memory 2201, the processor 2202, and the communication interface 2203 implement communication connection between each other through the bus 2204.

The memory 2201 may be a read only memory (read only memory, ROM), a static storage device, a dynamic storage device, or a random access memory (random access memory, RAM). The memory 2201 may store a program. When the program stored in the memory 2201 is executed by the processor 2202, the processor 2202 may be configured to perform the steps of the method shown in FIG. 10 or FIG. 15.

The processor 2202 may be a general-purpose central processing unit (central processing unit, CPU), a microprocessor, an application-specific integrated circuit (application-specific integrated circuit, ASIC), or one or more integrated circuits, and is configured to execute a related program, to implement the methods in the method embodiments of this application.

Alternatively, the processor 2202 may be an integrated circuit chip and has a signal processing capability. In an implementation process, the steps of the methods in embodiments of this application may be completed by using a hardware integrated logic circuit in the processor 2202 or instructions in a form of software.

Alternatively, the processor 2202 may be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 2201. The processor 2202 reads information from the memory 2201, and completes, in combination with hardware of the processor 2202, functions that need to be performed in the methods in embodiments of this application. For example, the processor 2202 may perform the steps/functions in the embodiment shown in FIG. 10 or FIG. 15.

The communication interface 2203 may implement communication between the apparatus 2200 and another apparatus by using, but not limited to, a transceiver apparatus such as a transceiver.

The bus 2204 may include a path for transmitting information between components (for example, the memory 2201, the processor 2202, and the communication interface 2203) of the apparatus 2200.

It should be understood that the apparatus 2200 shown in this embodiment of this application may be an electronic device, or may be a chip configured in an electronic device.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

As shown in FIG. 23, this application further provides a power converter 2300. The power converter 2300 may include a power conversion apparatus 2301 and a drive apparatus 2302.

In some implementations, the power conversion apparatus 2301 may be the power conversion apparatus shown in any one of FIG. 4, FIG. 7, FIG. 17, and FIG. 18. Correspondingly, the drive apparatus 2302 may be the drive apparatus configured to implement the driving method shown in FIG. 10.

In some other implementations, the power conversion apparatus 2301 may be the power conversion apparatus shown in FIG. 11 or FIG. 19. Correspondingly, the drive apparatus 2302 may be the drive apparatus configured to implement the driving method shown in FIG. 15.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects, but may also indicate an "and/or" relationship. For details, refer to the foregoing and subsequent descriptions for understanding.

In this application, at least one means one or more, and a plurality of means two or more. In addition, "at least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a first full-bridge converter, a transformer, and a second full-bridge converter, the transformer is separately connected to the first full-bridge converter and the second full-bridge converter, the power conversion apparatus further comprises a first sub-circuit and a second sub-circuit, the first sub-circuit comprises a first switching transistor and a first capacitor that are connected in series, and the second sub-circuit comprises a second switching transistor and a second capacitor that are connected in series; and
one switching transistor in a first bridge arm circuit in the first full-bridge converter is connected in parallel to the first sub-circuit, and the other switching transistor in the first bridge arm circuit is connected in parallel to the second sub-circuit.

2. The power conversion apparatus according to claim 1, wherein the power conversion apparatus further comprises a drive apparatus, and the drive apparatus is configured to:
drive the first full-bridge converter to work in a half-bridge mode and the second full-bridge converter to work in a full-bridge mode, and drive the first switching transistor and the second switching transistor to be turned on.

3. The power conversion apparatus according to claim 1, wherein the power conversion apparatus further comprises a third sub-circuit and a fourth sub-circuit, the third sub-circuit comprises a third switching transistor and a third capacitor that are connected in series, the fourth sub-circuit comprises a fourth switching transistor and a fourth capacitor that are connected in series, one switching transistor in a second bridge arm circuit of the second full-bridge converter is connected in parallel to the third sub-circuit, and the other switching transistor in the second bridge arm circuit is connected in parallel to the fourth sub-circuit.

4. The power conversion apparatus according to claim 3, wherein the power conversion apparatus further comprises a driver, and the driver is configured to:
drive the first full-bridge converter to work in a half-bridge mode and the second full-bridge converter to work in a full-bridge mode, and drive the first switching transistor and the second switching transistor to be turned on; or
drive the second full-bridge converter to work in a half-bridge mode and the first full-bridge converter to work in a full-bridge mode, and drive the third switching transistor and the fourth switching transistor to be turned on.

5. The power conversion apparatus according to any one of claims 1 to 4, wherein the second full-bridge converter is configured to connect to an input power supply.

6. The power conversion apparatus according to any one of claims 1 to 4, wherein the first full-bridge converter is configured to connect to an input power supply.

7. A method for driving a power conversion apparatus, wherein the power conversion apparatus comprises a first full-bridge converter, a transformer, and a second full-bridge converter, the transformer is separately connected to the first full-bridge converter and the second full-bridge converter, the power conversion apparatus further comprises a first sub-circuit and a second sub-circuit, the first sub-circuit comprises a first switching transistor and a first capacitor that are connected in series, the second sub-circuit comprises a second switching transistor and a second capacitor that are connected in series, one switching transistor in a first bridge arm circuit in the first full-bridge converter is connected in parallel to the first sub-circuit, the other switching transistor in the first bridge arm circuit is connected in parallel to the second sub-circuit, and the method comprises:
driving the first full-bridge converter to work in a half-bridge mode and the second full-bridge converter to work in a full-bridge mode, and driving the first switching transistor and the second switching transistor to be turned on.

8. The method according to claim 7, wherein the power conversion apparatus further comprises a third sub-circuit and a fourth sub-circuit, the third sub-circuit comprises a third switching transistor and a third capacitor that are connected in series, the fourth sub-circuit comprises a fourth switching transistor and a fourth capacitor that are connected in series, one switching transistor in a second bridge arm circuit of the second full-bridge converter is connected in parallel to the third sub-circuit, and the other switching transistor in the second bridge arm circuit is connected in parallel to the fourth sub-circuit; and
correspondingly, the method further comprises:
driving the second full-bridge converter to work in the half-bridge mode and the first full-bridge converter to work in the full-bridge mode, and driving the third switching transistor and the fourth switching transistor to be turned on.

9. The method according to claim 7 or 8, wherein the second full-bridge converter is configured to connect to an input power supply.

10. The method according to claim 7 or 8, wherein the first full-bridge converter is configured to connect to an input power supply.

11. A drive apparatus of a power conversion apparatus, comprising a module configured to implement the method according to any one of claims 7 to 10.

12. A drive apparatus of a power conversion apparatus, comprising a processor coupled to a memory, wherein
the memory is configured to store instructions; and
the processor is configured to execute the instructions in the memory, to implement the method according to any one of claims 7 to 10.

13. A computer-readable storage medium, wherein the computer storage medium stores a computer program or instructions, and when the computer program or the instructions are executed by a computing apparatus, the method according to any one of claims 7 to 10 is implemented.

14. A computer program product, comprising instructions for implementing the method according to any one of claims 7 to 10.

15. A power converter, comprising the power conversion apparatus according to any one of claims 1 to 6 and the drive apparatus according to claim 12.
